# EUROPEAN PATENT APPLICATION

(11) **EP 4 844 528 A1**
(43) Date of publication of application: **25.11.2026**
(21) Application number: 25196345.0
(22) Date of filing: 18.08.2025
(51) Int. Cl.: G06F 1/16

(54) **PORTABLE ELECTRONIC DEVICE**

(30) Priority: 21.05.2025 TW 114119098
(71) Applicant: Wistron Corporation, New Taipei City 22181 (TW)
(72) Inventor: LIANG, TI SHIANG, New Taipei City 22181 (TW); LIANG, CHEN YI, New Taipei City 22181 (TW); LI, MEI CHEN, New Taipei City 22181 (TW); SHIH, SHINNING, New Taipei City 22181 (TW)
(74) Representative: dompatent

(57) **Abstract**

A portable electronic device (10) including a first electronic device (100), an angle adjusting assembly (200) and a second electronic device (300). The angle adjusting assembly is rotatably disposed on the first electronic device along a first rotational axis (L1). The second electronic device is rotatably disposed on the angle adjusting assembly along a second rotational axis (L2) and a third rotational axis (L3). The second rotational axis is parallel to the first rotational axis. The third rotational axis is perpendicular to the first rotational axis and parallel to a normal direction (N1) of a display surface (310) of the second electronic device.

## Description

### Technical Field

The disclosure relates to an electronic device, more particularly to a portable electronic device.

### Background

In general, to meet various application requirements, desktop monitors or all-in-one (AIO) computers commonly support the function of switching the display screen between a portrait mode and a landscape mode.

However, comparing to desktop monitors or AIO computers, laptop computers is allowed to be opened or closed by additionally including a hinge. In this way, conventional laptop computers are not allowed to be switched between the portrait mode and the landscape mode, thereby reducing the flexibility of the application of the laptop computers.

### SUMMARY

The disclosure provides a portable electronic device whose angle adjusting assembly allows the second electronic device to be switched between the portrait mode and the landscape mode while being able to be opened and closed.

One embodiment of this disclosure provides a portable electronic device including a first electronic device, an angle adjusting assembly and a second electronic device. The angle adjusting assembly is rotatably disposed on the first electronic device along a first rotational axis. The second electronic device is rotatably disposed on the angle adjusting assembly along a second rotational axis and a third rotational axis. The second rotational axis is parallel to the first rotational axis. The third rotational axis is perpendicular to the first rotational axis and parallel to a normal direction of a display surface of the second electronic device.

According to the portable electronic device disclosed by above embodiments, the angle adjusting assembly is rotatably disposed on the first electronic device along the first rotational axis, and the second electronic device is rotatably disposed on the angle adjusting assembly along the second rotational axis and the third rotational axis. Thus, with the help of the angle adjusting assembly, the second electronic device not only is allowed to be opened or closed relative to the first electronic device by being rotated along the first rotational axis, but also is allowed to be switched between the landscape mode and the portrait mode by being rotated along the third rotational axis parallel to the normal direction of the display surface. In this way, the flexibility of the application of the portable electronic device is enhanced.

### BRIEF DESCRIPTION OF THE DRAWINGS

The present disclosure will become better understood from the detailed description given herein below and the accompanying drawings which are given by way of illustration only and thus are not intending to limit the present disclosure and wherein:
FIG. 1 is a schematic perspective view of a portable electronic device according to a first embodiment of the disclosure that is opened;
FIG. 2 is a perspective exploded view of the portable electronic device in FIG. 1;
FIG. 3 is a schematic front view of the portable electronic device in FIG. 1;
FIG. 4 is a side cross-sectional view of the portable electronic device in FIG. 1;
FIGS. 5 to 12 show the usage of the portable electronic device in FIG. 1;
FIG. 13 is a perspective exploded view of a portable electronic device according to a second embodiment of the disclosure;
FIG. 14 is a perspective exploded view of a portable electronic device according to a third embodiment of the disclosure;
FIG. 15 is a schematic front view of the portable electronic device in FIG. 14;
FIG. 16 is a perspective exploded view of a portable electronic device according to a fourth embodiment of the disclosure; and
FIGS. 17 and 18 show the usage of the portable electronic device in FIG. 16.

### DETAILED DESCRIPTION

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

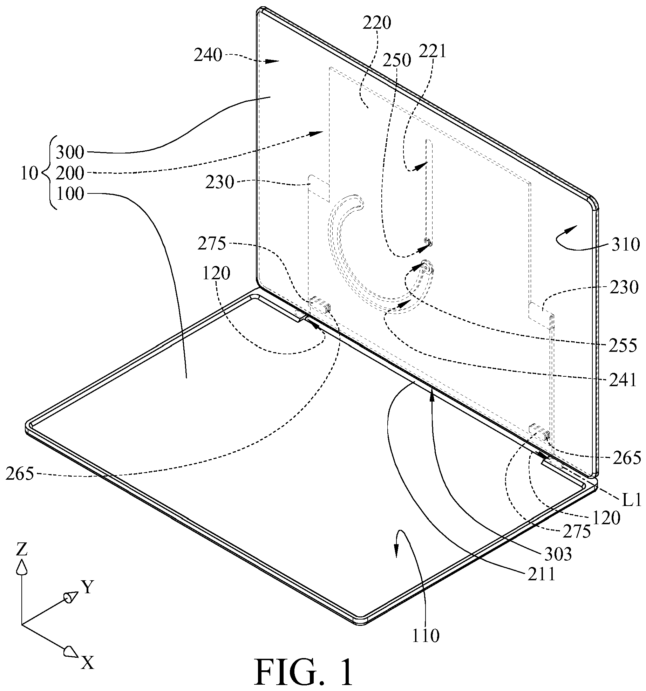

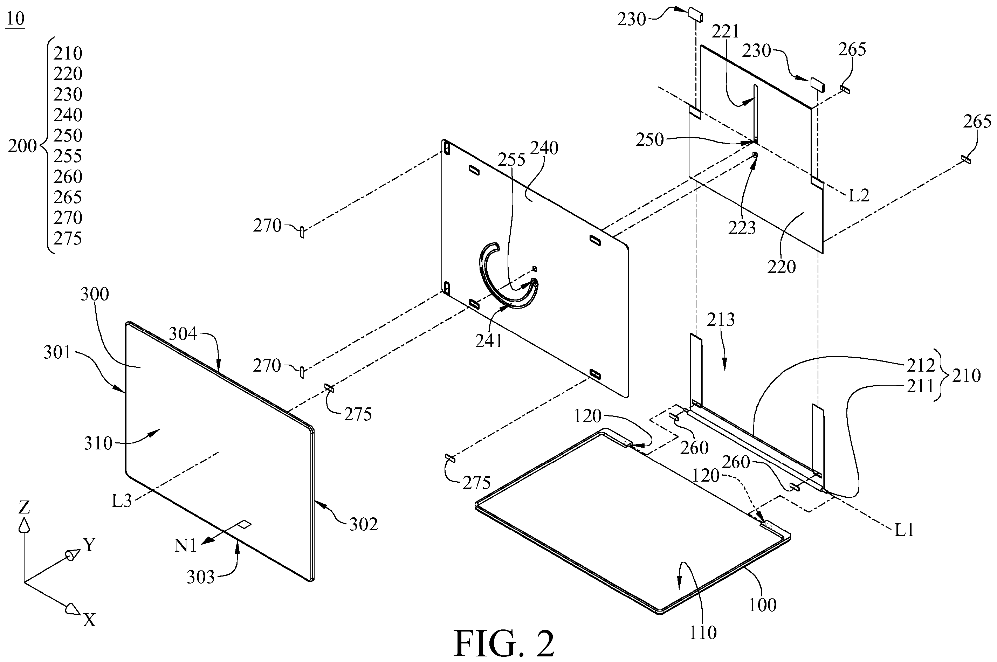

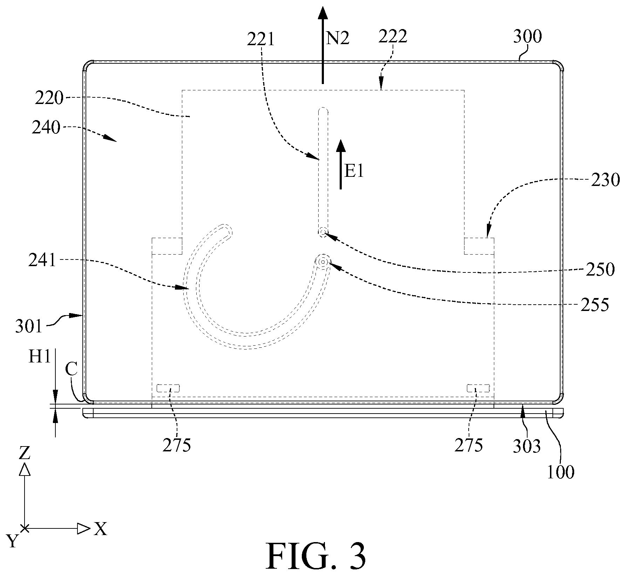

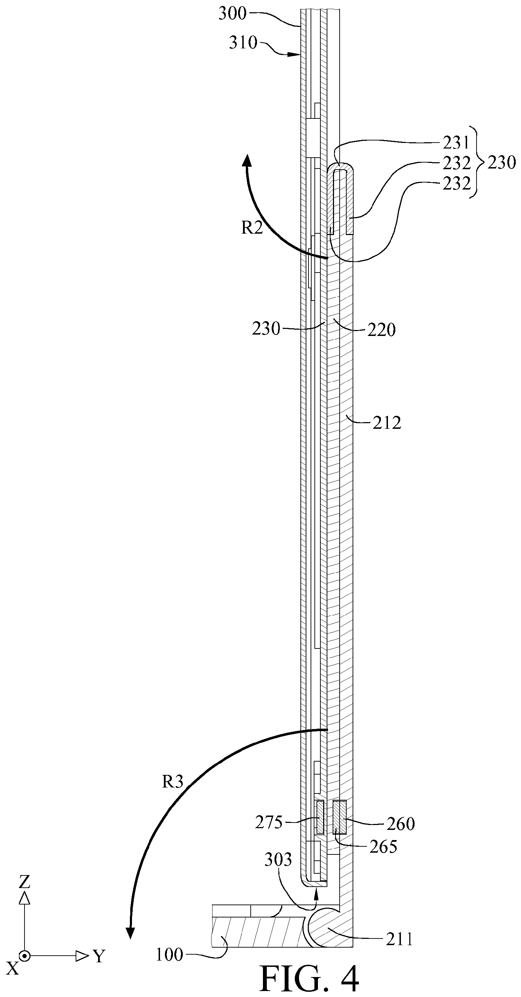

Please refer to FIGS. 1 to 4. FIG. 1 is a schematic perspective view of a portable electronic device 10 according to a first embodiment of the disclosure that is opened. FIG. 2 is a perspective exploded view of the portable electronic device 10 in FIG. 1. FIG. 3 is a schematic front view of the portable electronic device 10 in FIG. 1. FIG. 4 is a side cross-sectional view of the portable electronic device 10 in FIG. 1.

In this embodiment, the portable electronic device 10 includes a first electronic device 100, an angle adjusting assembly 200 and a second electronic device 300.

In this embodiment, the first electronic device 100 and the second electronic device 300 are, for example, touch screens respectively having display surfaces 110 and 310. Noted that the disclosure is not limited to the types of the first electronic device 100 and the second electronic device 300. In other embodiments, the first electronic device may be a host of a typical laptop computer including a keyboard, and the second electronic device may be any type of display capable of being triggered via its display surface.

The second electronic device 300 is movably disposed on the first electronic device 100 via the angle adjusting assembly 200 so that an angle therebetween is allowed to be adjusted. In detail, in this embodiment, the angle adjusting assembly 200 includes, for example, a pivot joint 210, a flipped plate 220, a flexible component 230, a guiding component 240, a first sliding component 250, a second sliding component 255, two first magnets 260, two second magnets 265, two third magnets 270 and two fourth magnets 275.

The pivot joint 210 includes a pivot portion 211 and a bracket portion 212. The pivot portion 211 is rotatably disposed in two mounting holes 120 of the first electronic device 100 along a first rotational axis L1. In this embodiment, the pivot portion 211 includes, for example, a wider portion and two narrower portions. The bracket portion 212 protrudes from a side of the pivot portion 211 and has a recess 213.

The flipped plate 220 is, for example, rotatably disposed on a side of the bracket portion 212 located away from the pivot portion 211 via the flexible component 230 along a second rotational axis L2. Specifically, the flexible component 230 is flexible and includes a foldable portion 231 and two fixed portions 232. The foldable portion 231 connects the two fixed portions 232. The two fixed portions 232 are respectively fixed to the flipped plate 220 and the bracket portion 212, thereby allowing the flipped plate 220 to be rotatably disposed on the side of the bracket portion 212 located away from the pivot portion 211 along the second rotational axis L2. Since this embodiment realizes the rotation of the flipped plate 220 along the second rotational axis L2 via the flexible component 230, the portable electronic device 10 is thinner, lighter and more aesthetically appealing. In other embodiments, the flexible component may be replaced with a hinge or other structures realizing the rotation of the flipped plate along the second rotational axis by the cooperation of a shaft and a hole.

The guiding component 240 is slidably disposed on the flipped plate 220 so as to allow the second electronic device 300 to be rotatably disposed on the flipped plate 220 along a third rotational axis L3. That is, the second electronic device 300 is rotatably disposed on the side of the bracket portion 212 located away from the pivot portion 211 along the second rotational axis L2 via the flipped plate 220 and the flexible component 230, and the second electronic device 300 may be rotated by the guiding component 240 so as to be rotatably disposed on the side of the bracket portion 212 located away from the pivot portion 211 along the third rotational axis L3. In other words, the flip of the second electronic device 300 along the second rotational axis L2 is realized by flipping the flipped plate 220 relative to the bracket portion 212 by the flexible component 230; also, the rotation of the second electronic device 300 along the third rotational axis L3 is realized by forcing the guiding component 240 to slide relative to the flipped plate 220. The second rotational axis L2 is parallel to the first rotational axis L1. The third rotational axis L3 is perpendicular to the first rotational axis L1, and is parallel to a normal direction N1 of the display surface 310 of the second electronic device 300.

In this embodiment, the flipped plate 220 has a straight sliding groove 221. The first sliding component 250 connects the second electronic device 300 and the guiding component 240, and is slidably disposed in the straight sliding groove 221. The guiding component 240 has an arc sliding groove 241. The second sliding component 255 is connected to a fixing hole 223 of the flipped plate 220 and is slidably disposed in the arc sliding groove 241. The first sliding component 250 and the second sliding component 255 may, for example, include fasteners such as screws and washers to achieve the aforementioned connections (i.e., the connection between the first sliding component 250 and both of the second electronic device 300 and the guiding component 240, and the connection between the second sliding component 255 and the fixing hole 223).

In addition, in this embodiment, the flipped plate 220 has a side surface 222 that is located adjacent to the straight sliding groove 221 and facing away from the bracket portion 212. An extending direction E1 of the straight sliding groove 221 is, for example, parallel to a normal direction N2 of the side surface 222.

The two first magnets 260 are fixed to the bracket portion 212 and spaced apart from each other. The two second magnets 265 are fixed to the flipped plate 220 and spaced apart from each other. The two first magnets 260 respectively attract the two second magnets 265, thereby further enhancing the reliability for assembling the bracket portion 212 and the flipped plate 220. In other embodiments, the angle adjusting assembly may include one first magnet and one second magnet. In still other embodiments, the angle adjusting assembly may not include the first magnet and the second magnet.

The two third magnets 270 are fixed to the guiding component 240 and are spaced apart from each other. The fourth magnets 275 are fixed to the guiding component 240 and are spaced apart from each other. In other embodiments, the angle adjusting assembly may include one third magnet and one fourth magnet. Alternatively, in still other embodiments, the angle adjusting assembly may not include the third magnet and the fourth magnet.

The second electronic device 300 has a first short edge 301, a second short edge 302, a first long edge 303, and a second long edge 304. The first short edge 301 and the second short edge 302 are opposite to each other. The first long edge 303 and the second long edge 304 are opposite to each other and located between the first short edge 301 and the second short edge 302. The first short edge 301 and the second short edge 302 are shorter than the first long edge 303 and the second long edge 304. The second electronic device 300 is rotatably disposed on the flipped plate 220 along the third rotational axis L3, such that either the first short edge 301 or the first long edge 303 is located adjacent to the first electronic device 100 and disposed along the first rotational axis L1.

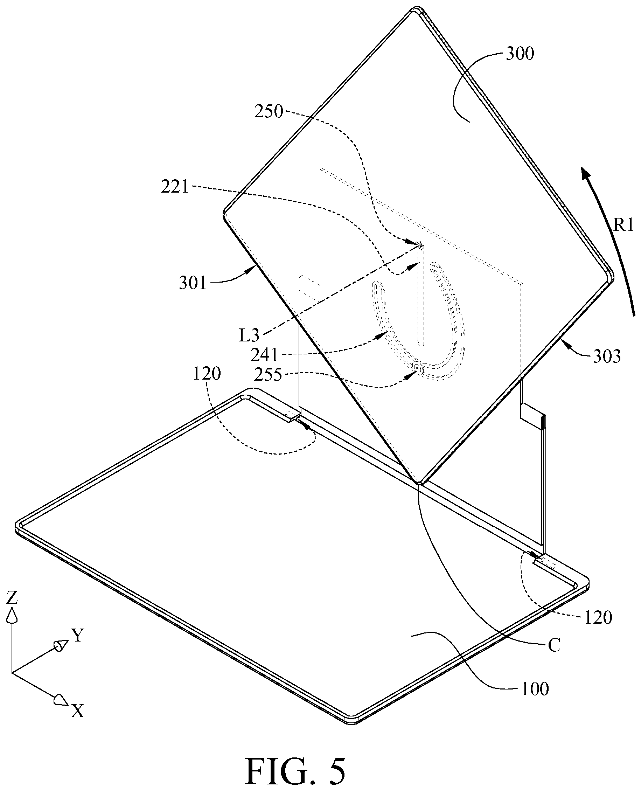

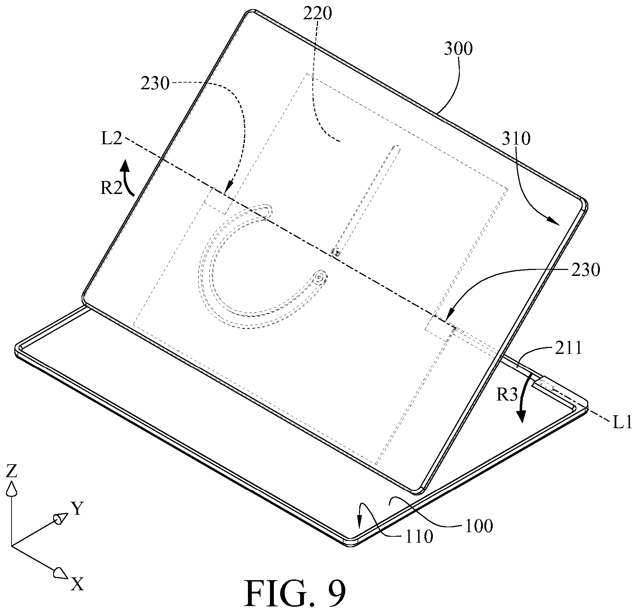

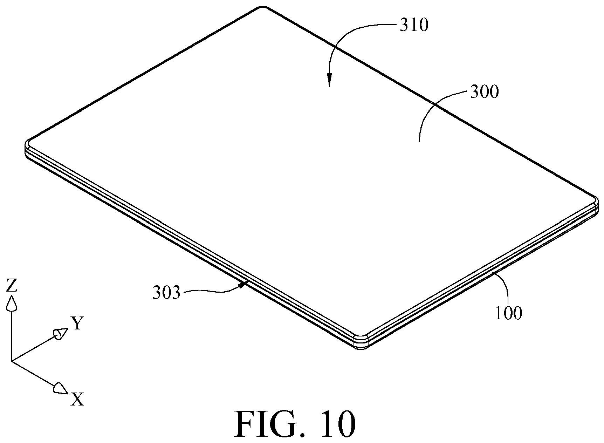

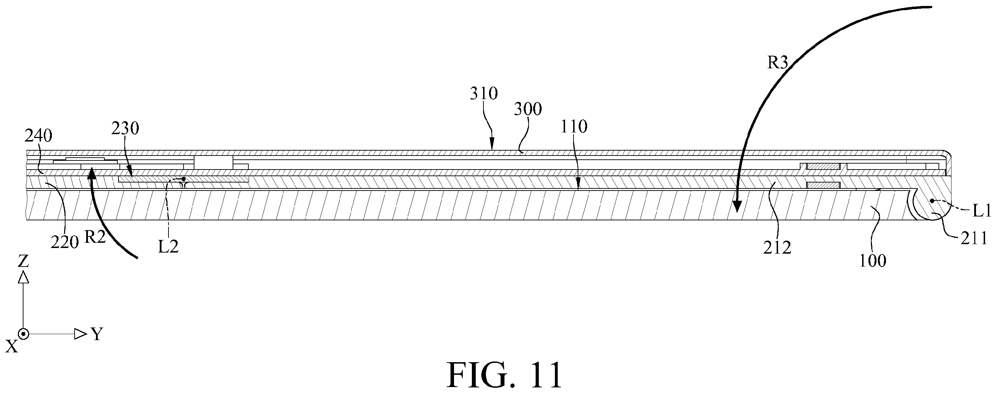

Hereinafter, the usage of the portable electronic device 10 will be explained by referring to FIGS. 1 to 12. FIGS. 5 to 12 show the usage of the portable electronic device 10 in FIG. 1. First, the rotation of the second electronic device 300 along the third rotational axis L3 will be described.

As shown in FIGS. 1, 3 and 4, when the second electronic device 300 is opened relative to the first electronic device 100 and is in a landscape mode, the first long edge 303 is located adjacent to the first electronic device 100 and disposed along the first rotational axis L1. In this way, the first sliding component 250 is located on an end of the straight sliding groove 221 (e.g., an end of the straight sliding groove 221 located close to the mounting holes 120), and the fourth magnets 275 and the second magnets 265 attract each other to hold the second electronic device 300 in the position of the landscape mode. In addition, a corner C of the second electronic device 300 connecting the first short edge 301 and the first long edge 303 has a first height H1 relative to the first electronic device 100.

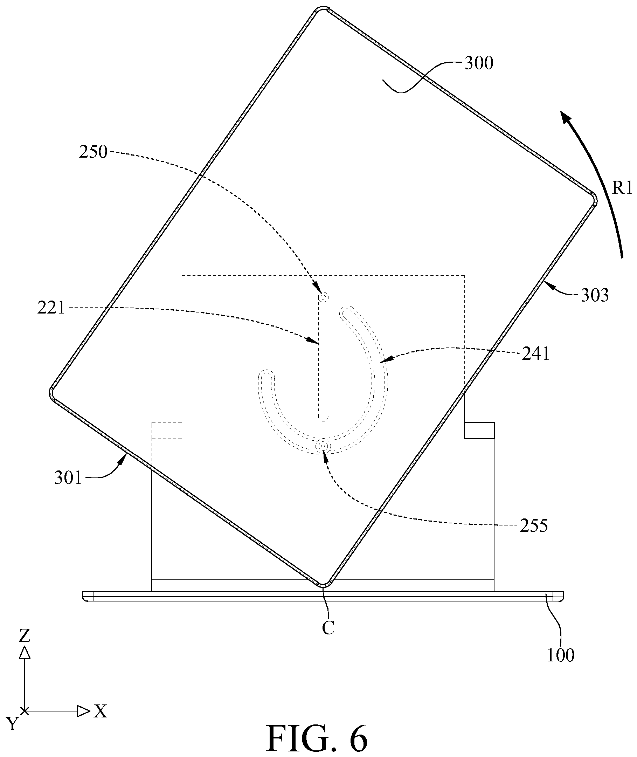

As shown in FIGS. 5 and 6, before switching the second electronic device 300 from the landscape mode to a portrait mode, the second electronic device 300 is firstly rotated to the position shown in FIGS. 5 and 6 along a rotating direction R1 (i.e., along the third rotational axis L3). When the second electronic device 300 is rotated along the rotating direction R1, the first sliding component 250 raises the second electronic device 300 relative to the first electronic device 100 by sliding in the straight sliding groove 221 away from the mounting holes 120, and the second sliding component 255 rotates the second electronic device 300 by sliding in the arc sliding groove 241. As shown in FIGS. 5 and 6, when the second electronic device 300 is rotated along the rotating direction R1 to move the first sliding component 250 to the other end of the straight sliding groove 221 (e.g., the end of the straight sliding groove 221 located away from the mounting holes 120), a corner C connecting the first short side edge 301 and the first long side edge 303 is located adjacent to the first electronic device 100.

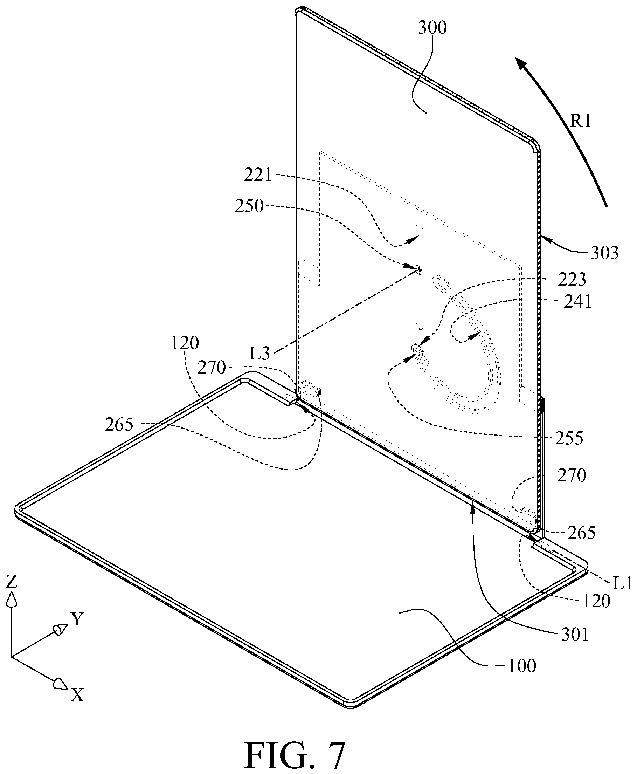

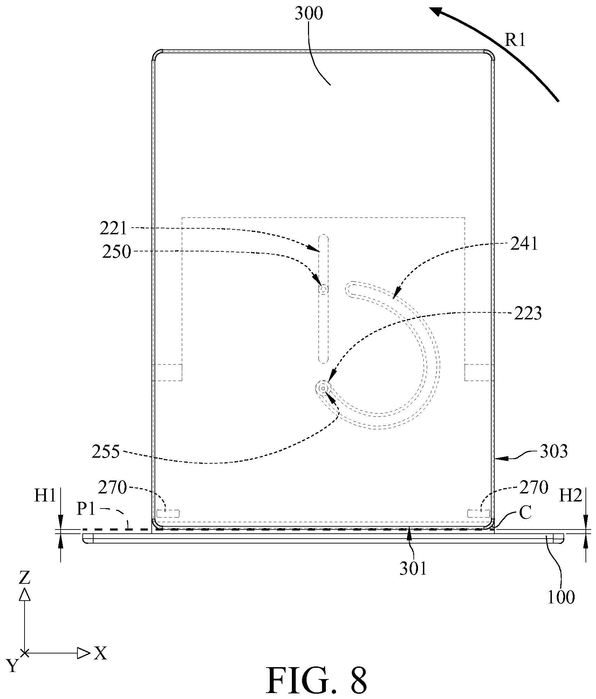

Then, as shown in FIGS. 7 and 8, the second electronic device 300 is further rotated along the rotating direction R1 (i.e., along the third rotational axis L3) to the position shown in FIGS. 7 and 8, thereby switching the second electronic device 300 to the portrait mode. When the second electronic device 300 is further rotated along the rotating direction R1, the first sliding component 250 lowers the second electronic device 300 relative to the first electronic device 100 by sliding in the straight sliding groove 221 toward the mounting holes 120, and the second sliding component 255 rotates the second electronic device 300 by sliding in the arc sliding groove 241. In this way, the first short side edge 301 is located adjacent to the first electronic device 100 and disposed along the first rotational axis L1. At this point, the third magnets 270 and the second magnets 265 attract each other, thereby holding the second electronic device 300 in the position of the portrait mode.

Furthermore, when the second electronic device 300 is switched to the portrait mode, the fixing hole 223 of the flipped plate 220, through which the second sliding component 255 is disposed, is located closer to the mounting holes 120 of the first electronic device 100 than the straight sliding groove 221. Thus, the space for the second electronic device 300 to be switched between the portrait mode and the landscape mode is small. However, the disclosure is not limited thereto. In other embodiments, the shape and size of the flipped plate may be adjusted such that the fixing hole, through which the second sliding component is disposed, is located farther from the mounting holes of the first electronic device than the straight sliding groove when the second electronic device is switched to the portrait mode.

In addition, the corner C has a second height H2 relative to the first electronic device 100. As shown in FIGS. 3 and 8, the first height H1 is equal to the second height H2. That is, during the process for the second electronic device 300 to be switched from the landscape mode to the portrait mode, the corner C is moved along, for example, a horizontal straight path P1 in FIG. 8.

Please refer to FIGS. 1, 2, and 9. When the flipped plate 220 is flipped relative to the bracket portion 212 via the flexible component 230 along a flipping direction R2 (i.e., along the second rotational axis L2), and the bracket portion 212 is rotated relative to the first electronic device 100 via the pivot portion 211 along a rotating direction R3 (i.e., along the first rotational axis L1), the second electronic device 300 is partially closed relative to the first electronic device 100.

Please refer to FIGS. 1, 4, 10, and 11. When the flipped plate 220 is further flipped relative to the bracket portion 212 via the flexible component 230 along the flipping direction R2 (i.e., along the second rotational axis L2), and the bracket portion 212 is further rotated relative to the first electronic device 100 via the pivot portion 211 along the rotating direction R3 (i.e., along the first rotational axis L1), the second electronic device 300 is closed (i.e., fully closed) relative to the first electronic device 100. When the second electronic device 300 is fully closed relative to the first electronic device 100, the display surface 110 of the first electronic device 100 faces the second electronic device 300, and the display surface 310 of the second electronic device 300 faces away from the first electronic device 100.

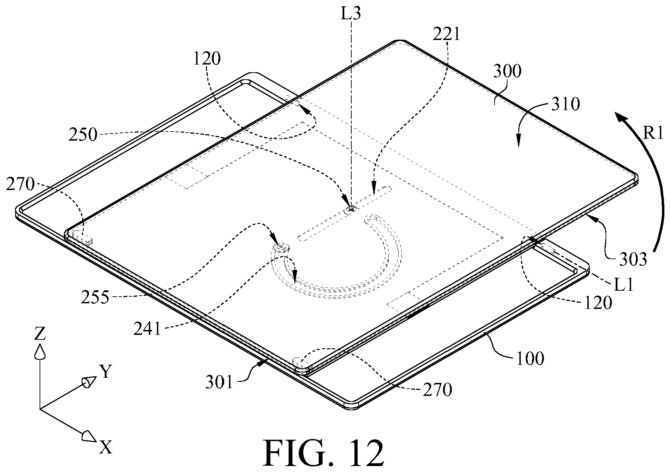

Moreover, as shown in FIG. 12, the second electronic device 300 may be switched from the landscape mode to the portrait mode by being rotated along the rotating direction R1 (i.e., along the third rotational axis L3). With the flexible component 230, when the second electronic device 300 is closed relative to the first electronic device 100, the second electronic device 300 is allowed to be switched between the landscape mode and the portrait mode while the display surface 310 of the second electronic device 300 faces away from the first electronic device 100. Noted that the second electronic device 300 is allowed to be switched between the landscape mode and the portrait mode based on the aforementioned operating principle, regardless of whether the second electronic device 300 is opened or closed relative to the first electronic device 100. Accordingly, the details for the second electronic device 300 to be switched from the landscape mode to the portrait mode when being closed relative to the first electronic device 100 may be understood by referring to FIGS. 7 and 8 and the related descriptions, and thus the repeated descriptions are omitted herein.

As shown in FIGS. 2 and 12, the pivot joint 210 is rotatably disposed on the first electronic device 100 along the first rotational axis L1, and the second electronic device 300 is rotatably disposed on the pivot joint 210 along the second rotational axis L2 and the third rotational axis L3. Thus, with the help of the angle adjusting assembly 200, the second electronic device 300 not only is allowed to be opened or closed relative to the first electronic device 100 by being rotated along the first rotational axis L1, but also is allowed to be switched between the landscape mode and the portrait mode by being rotated along the third rotational axis L3 parallel to the normal direction N1 of the display surface 110. In this way, the flexibility of the application of the portable electronic device 10 is enhanced.

Other embodiments are described below for illustrative purposes. It is to be noted that the following embodiments use the reference numerals and a part of the contents of the above embodiments, the same reference numerals are used to denote the same or similar elements, and the description of the same technical contents is omitted. For the description of the omitted part, reference may be made to the above embodiments, and details are not described in the following embodiments.

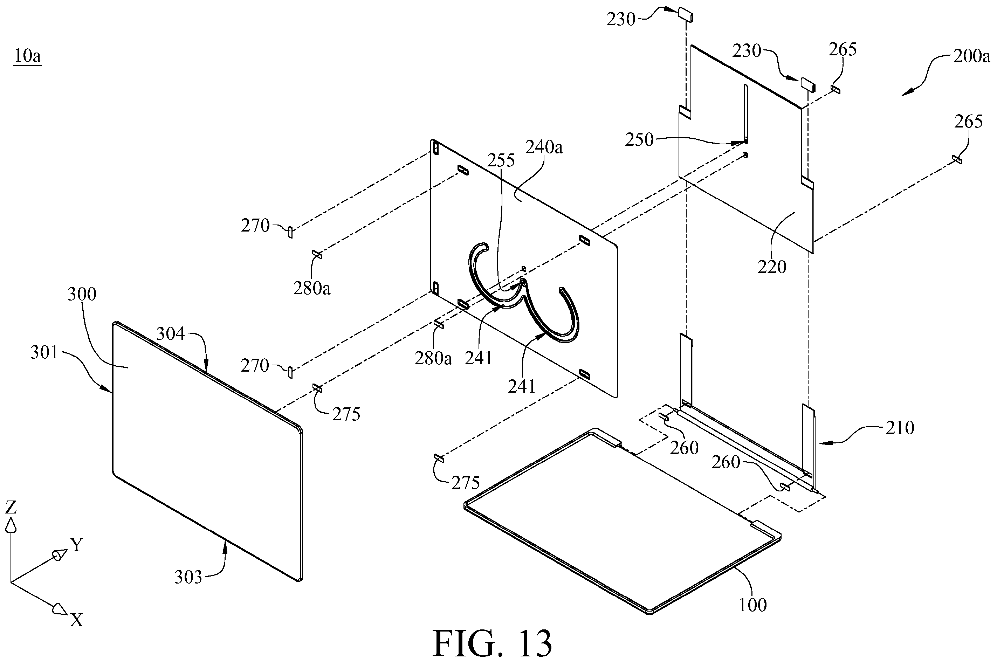

The disclosure is not limited by the number of the arc sliding groove(s) on the guiding component. Please refer to FIG. 13. FIG. 13 is a perspective exploded view of a portable electronic device 10a according to a second embodiment of the disclosure. The main difference between the portable electronic device 10a of this embodiment and the portable electronic device 10 of the first embodiment is the number of arc sliding grooves 241 on a guiding component 240a of an angle adjusting assembly 200a. In this embodiment, the guiding component 240a has a plurality of arc sliding grooves 241. The arc sliding grooves 241 are connected to one another and symmetrically arranged on the guiding component 240a. The angle adjusting assembly 200a may further include, for example, two fifth magnets 280a. The two fifth magnets 280a are fixed to the guiding component 240a and spaced apart from each other. In this embodiment, there are, for example, two arc sliding grooves 241, thereby allowing the guiding component 240a to be rotated by 180 degrees relative to the flipped plate 220, with the fifth magnets 280a being configured to hold the second electronic device 300 in position when the second long side edge 304 is located adjacent to the first electronic device 100. However, the disclosure is not limited thereto. In other embodiments, there may be four arc sliding grooves, thereby allowing the guiding component to be rotated by 360 degrees relative to the flipped plate.

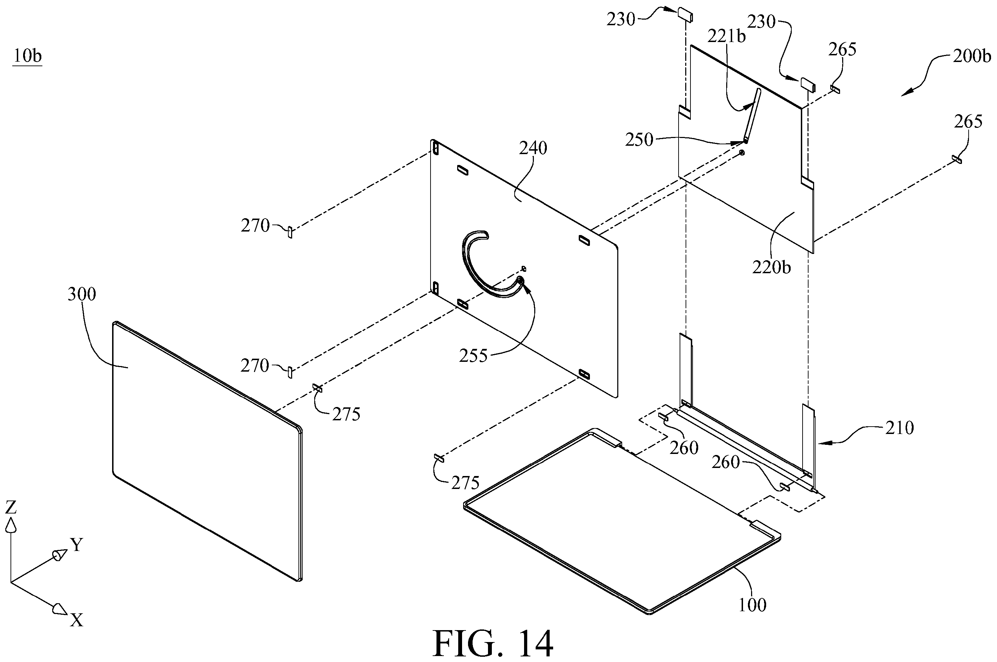

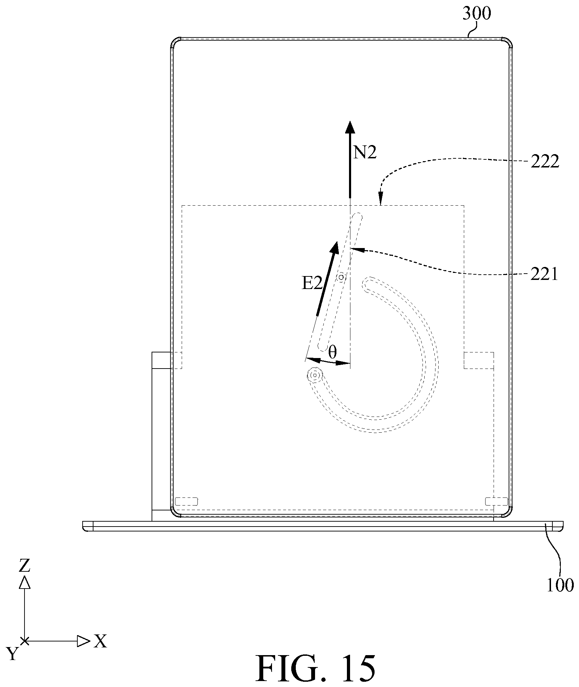

The disclosure is not limited to the shape of the straight sliding groove on the flipped plate. Please refer to FIGS. 14 and 15. FIG. 14 is a perspective exploded view of a portable electronic device 10b according to a third embodiment of the disclosure. FIG. 15 is a schematic front view of the portable electronic device 10b in FIG. 14. The main difference between the portable electronic device 10b of this embodiment and the portable electronic device 10 of the first embodiment is the shape of a straight sliding groove 221b formed on a flipped plate 220b of an angle adjusting assembly 200b. In this embodiment, an extending direction E2 of the straight sliding groove 221b is at an acute angle θ to a normal direction N2 of the side surface 222, such that the second electronic device 300 is offset when being in the portrait mode (as shown in FIG. 15).

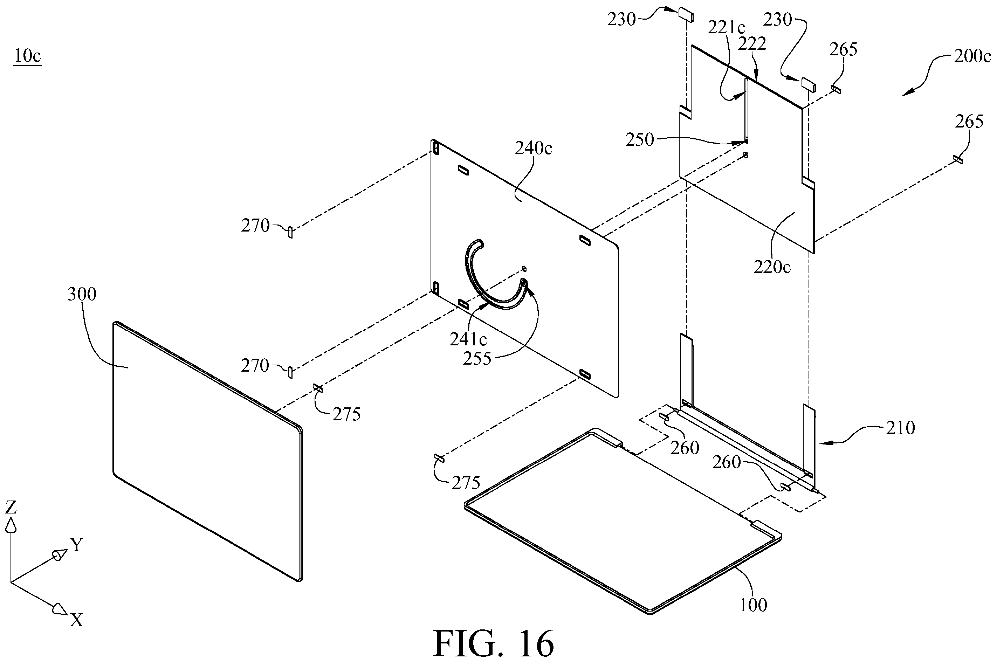

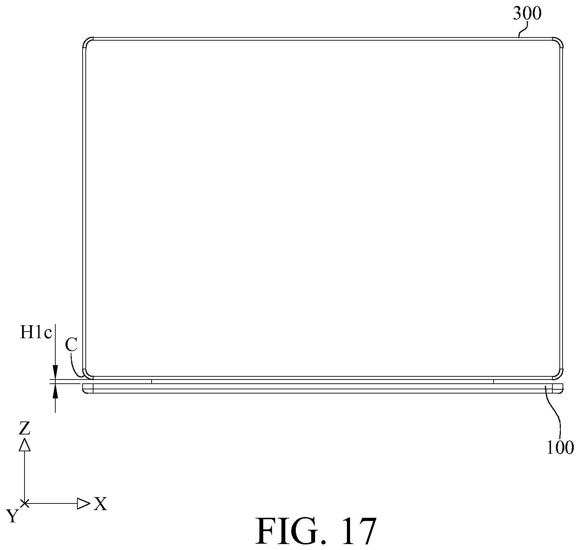

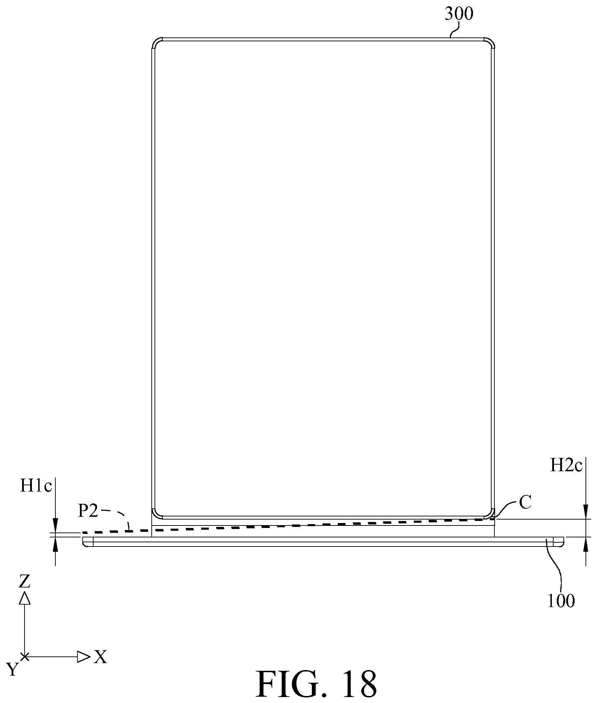

The disclosure is not limited to the path along which the corner is moved during the switching process between the landscape mode and the portrait mode. Please refer to FIGS. 16 to 18. FIG. 16 is a perspective exploded view of a portable electronic device 10c according to a fourth embodiment of the disclosure. FIGS. 17 and 18 show the usage of the portable electronic device 10c in FIG. 16. The main difference between the portable electronic device 10c of this embodiment and the portable electronic device 10 of the first embodiment is the path along which the corner C is moved during the switching process between the landscape mode and the portrait mode. In this embodiment, compared to the first embodiment, a straight sliding groove 221c of a flipped plate 220c is located closer to the side surface 222, and an arc sliding groove 241c of a guiding component 240c has a larger radius of curvature. As a result, when the second electronic device 300 is in the portrait mode, a second height H2c of the corner C relative to the first electronic device 100 is higher than a first height H1c of the corner C when the second electronic device 300 is in the landscape mode. That is, during the switching process from the landscape mode to the portrait mode, the corner C is moved along an inclined straight path P2 shown in FIG. 18.

Note that in some embodiments, the guiding component may be removably disposed on the flipped plate via snap fit or any other suitable manners, thereby allowing the flipped plate to be optionally assembled to any one of the guiding components 240, 240a and 240c disclosed in aforementioned embodiments.

According to the portable electronic device disclosed by above embodiments, the angle adjusting assembly is rotatably disposed on the first electronic device along the first rotational axis, and the second electronic device is rotatably disposed on the angle adjusting assembly along the second rotational axis and the third rotational axis. Thus, with the help of the angle adjusting assembly, the second electronic device not only is allowed to be opened or closed relative to the first electronic device by being rotated along the first rotational axis, but also is allowed to be switched between the landscape mode and the portrait mode by being rotated along the third rotational axis parallel to the normal direction of the display surface. In this way, the flexibility of the application of the portable electronic device is enhanced.

Moreover, with the flexible component, when the second electronic device is closed relative to the first electronic device, the second electronic device is allowed to be switched between the landscape mode and the portrait mode while the display surface faces away from the first electronic device. Also, since the rotation of the flipped plate along the second rotational axis is realized by the flexible component, the portable electronic device is thinner, lighter and more aesthetically appealing.

It will be apparent to those skilled in the art that various modifications and variations can be made to the present disclosure. It is intended that the specification and examples be considered as exemplary embodiments only, with a scope of the disclosure being indicated by the following claims and their equivalents.

## Claims

1. A portable electronic device (10, 10a, 10b, 10c), comprising:
a first electronic device (100);
an angle adjusting assembly (200, 200a, 200b), rotatably disposed on the first electronic device along a first rotational axis (L1); and
a second electronic device (300), rotatably disposed on the angle adjusting assembly along a second rotational axis (L2) and a third rotational axis (L3), wherein the second rotational axis is parallel to the first rotational axis, and the third rotational axis is perpendicular to the first rotational axis and parallel to a normal direction (N1) of a display surface (310) of the second electronic device.

2. The portable electronic device according to claim 1, wherein the angle adjusting assembly comprises a pivot joint (210), the pivot joint comprises a pivot portion (211) and a bracket portion (212), the pivot portion is rotatably disposed on the first electronic device along the first rotational axis, the bracket portion protrudes from a side of the pivot portion, and the second electronic device is rotatably disposed on a side of the bracket portion located away from the pivot portion along the second rotational axis and the third rotational axis.

3. The portable electronic device according to claim 2, wherein the angle adjusting assembly further comprises a flipped plate (220, 220b, 220c) and a guiding component (240, 240a, 240c), the flipped plate is rotatably disposed on the side of the bracket portion located away from the pivot portion along the second rotational axis, and the guiding component is slidably disposed on the flipped plate to allow the second electronic device to be rotatably disposed on the flipped plate along the third rotational axis.

4. The portable electronic device according to claim 3, wherein the angle adjusting assembly further comprises a first sliding component (250) and a second sliding component (255), the flipped plate has a straight sliding groove (221, 221b, 221c), the first sliding component connects the second electronic device and the guiding component and is slidably disposed in the straight sliding groove, the guiding component has an arc sliding groove (241, 241c), and the second sliding component is connected to the flipped plate and slidably disposed in the arc sliding groove.

5. The portable electronic device according to claim 4, wherein the arc sliding groove comprises a plurality of arc sliding grooves connected to each other and symmetrically arranged on the guiding component.

6. The portable electronic device according to claim 4, wherein the flipped plate has a side surface (222) located adjacent to the straight sliding groove and facing away from the bracket portion, and an extending direction (E2) of the straight sliding groove is parallel to a normal direction (N2) of the side surface.

7. The portable electronic device according to claim 4, wherein the flipped plate (220b) has a side surface (222) located adjacent to the straight sliding groove and facing away from the bracket portion, and an extending direction (E2) of the straight sliding groove is at an acute angle (θ) to a normal direction (N2) of the side surface.

8. The portable electronic device according to claim 4, wherein the pivot portion is rotatably disposed in a mounting hole (120) of the first electronic device along the first rotational axis, the second electronic device has a first short edge (301), a second short edge (302), a first long edge (303) and a second long edge (304), the first short edge and the second short edge are opposite to each other, the first long edge and the second long edge are opposite to each other and located between the first short edge and the second short edge, the first short edge and the second short edge are shorter than the first long edge and the second long edge, the second electronic device is rotatably disposed on the flipped plate along the third rotational axis to allow one of the first short edge and the first long edge to be located adjacent to the first electronic device and disposed along the first rotational axis.

9. The portable electronic device according to claim 8, wherein when the first sliding component is located in an end of the straight sliding groove, the first long edge is located adjacent to the first electronic device and disposed along the first rotational axis, when the first sliding component is located in another end of the straight sliding groove, a corner of the second electronic device connecting the first short edge and the first long edge is located adjacent to the first electronic device.

10. The portable electronic device according to claim 8, wherein the angle adjusting assembly further comprises a flexible component (230), the flexible component is flexible and comprises a foldable portion (231) and two fixed portions (232), the foldable portion connects the two fixed portions, the two fixed portions are respectively fixed to the flipped plate and the bracket portion to allow the flipped plate to be rotatably disposed on the side of the bracket portion located away from the pivot portion along the second rotational axis.

11. The portable electronic device according to claim 10, wherein the angle adjusting assembly further comprises a first magnet (260) and a second magnet (265), the first magnet is fixed to the bracket portion, the second magnet is fixed to the flipped plate, and the first magnet and the second magnet attract each other, the angle adjusting assembly further comprises a third magnet (270) and a fourth magnet (275), the third magnet and the fourth magnet are fixed to the guiding component, when the first short edge is located adjacent to the first electronic device and disposed along the first rotational axis, the third magnet and the second magnet attract each other, when the first long edge is located adjacent to the first electronic device and disposed along the first rotational axis, the fourth magnet and the second magnet attract each other.

12. The portable electronic device according to claim 8, wherein when the first short edge is located adjacent to the first electronic device and disposed along the first rotational axis, a fixing hole (223) of the flipped plate, through which the second sliding component is disposed, is located closer to the mounting hole of the first electronic device than the straight sliding groove.

13. The portable electronic device according to claim 8, wherein when the first long edge is located adjacent to the first electronic device and disposed along the first rotational axis, a corner (C) of the second electronic device connecting the first short edge and the first long edge has a first height (H1) relative to the first electronic device, when the first short edge is located adjacent to the first electronic device and disposed along the first rotational axis, the corner has a second height (H2) relative to the first electronic device, and the first height is equal to the second height.

14. The portable electronic device according to claim 8, wherein when the first long edge is located adjacent to the first electronic device and disposed along the first rotational axis, a corner of the second electronic device connecting the first short edge and the first long edge has a first height (H1c) relative to the first electronic device, when the first short edge is located adjacent to the first electronic device and disposed along the first rotational axis, the corner has a second height (H2c) relative to the first electronic device, and the second height is higher than the first height.

15. The portable electronic device according to claim **1,** wherein the second electronic device is a touch screen, the first electronic device is a touch screen, and when the second electronic device is closed relative to the first electronic device, the display surface of the second electronic device faces away from the first electronic device.

## Amended claims

### Amended claims in accordance with Rule 137(2) EPC.

1. A portable electronic device (10, 10a, 10b, 10c), comprising:
a first electronic device (100);
an angle adjusting assembly (200, 200a, 200b), rotatably disposed on the first electronic device along a first rotational axis (L1); and
a second electronic device (300), rotatably disposed on the angle adjusting assembly along a second rotational axis (L2) and a third rotational axis (L3), wherein the second rotational axis is parallel to the first rotational axis, and the third rotational axis is perpendicular to the first rotational axis and parallel to a normal direction (N1) of a display surface (310) of the second electronic device;
wherein the angle adjusting assembly comprises a flipped plate (220, 220b, 220c) having a straight sliding groove (221, 221b, 221c) and a guiding component (240, 240a, 240c) having an arc sliding groove (241, 241c), the guiding component is slidably disposed on the flipped plate via the straight sliding groove and the arc sliding groove, and the arc sliding groove is located closer to the second electronic device than the straight sliding groove.

2. The portable electronic device according to claim 1, wherein the angle adjusting assembly further comprises a pivot joint (210), the pivot joint comprises a pivot portion (211) and a bracket portion (212), the pivot portion is rotatably disposed on the first electronic device along the first rotational axis, the bracket portion protrudes from a side of the pivot portion, and the second electronic device is rotatably disposed on a side of the bracket portion located away from the pivot portion along the second rotational axis and the third rotational axis.

3. The portable electronic device according to claim 2, wherein the flipped plate is rotatably disposed on the side of the bracket portion located away from the pivot portion along the second rotational axis, and the guiding component is slidably disposed on the flipped plate to allow the second electronic device to be rotatably disposed on the flipped plate along the third rotational axis.

4. The portable electronic device according to claim 3, wherein the angle adjusting assembly further comprises a first sliding component (250) and a second sliding component (255), the first sliding component connects the second electronic device and the guiding component and is slidably disposed in the straight sliding groove, and the second sliding component is connected to the flipped plate and slidably disposed in the arc sliding groove.

5. The portable electronic device according to claim 4, wherein the arc sliding groove comprises a plurality of arc sliding grooves connected to each other and symmetrically arranged on the guiding component.

6. The portable electronic device according to claim 4, wherein the flipped plate has a side surface (222) located adjacent to the straight sliding groove and facing away from the bracket portion, and an extending direction (E2) of the straight sliding groove is parallel to a normal direction (N2) of the side surface.

7. The portable electronic device according to claim 4, wherein the flipped plate (220b) has a side surface (222) located adjacent to the straight sliding groove and facing away from the bracket portion, and an extending direction (E2) of the straight sliding groove is at an acute angle (0) to a normal direction (N2) of the side surface.

8. The portable electronic device according to claim 4, wherein the pivot portion is rotatably disposed in a mounting hole (120) of the first electronic device along the first rotational axis, the second electronic device has a first short edge (301), a second short edge (302), a first long edge (303) and a second long edge (304), the first short edge and the second short edge are opposite to each other, the first long edge and the second long edge are opposite to each other and located between the first short edge and the second short edge, the first short edge and the second short edge are shorter than the first long edge and the second long edge, the second electronic device is rotatably disposed on the flipped plate along the third rotational axis to allow one of the first short edge and the first long edge to be located adjacent to the first electronic device and disposed along the first rotational axis.

9. The portable electronic device according to claim 8, wherein when the first sliding component is located in an end of the straight sliding groove, the first long edge is located adjacent to the first electronic device and disposed along the first rotational axis, when the first sliding component is located in another end of the straight sliding groove, a corner of the second electronic device connecting the first short edge and the first long edge is located adjacent to the first electronic device.

10. The portable electronic device according to claim 8, wherein the angle adjusting assembly further comprises a flexible component (230), the flexible component is flexible and comprises a foldable portion (231) and two fixed portions (232), the foldable portion connects the two fixed portions, the two fixed portions are respectively fixed to the flipped plate and the bracket portion to allow the flipped plate to be rotatably disposed on the side of the bracket portion located away from the pivot portion along the second rotational axis.

11. The portable electronic device according to claim 10, wherein the angle adjusting assembly further comprises a first magnet (260) and a second magnet (265), the first magnet is fixed to the bracket portion, the second magnet is fixed to the flipped plate, and the first magnet and the second magnet attract each other, the angle adjusting assembly further comprises a third magnet (270) and a fourth magnet (275), the third magnet and the fourth magnet are fixed to the guiding component, when the first short edge is located adjacent to the first electronic device and disposed along the first rotational axis, the third magnet and the second magnet attract each other, when the first long edge is located adjacent to the first electronic device and disposed along the first rotational axis, the fourth magnet and the second magnet attract each other.

12. The portable electronic device according to claim 8, wherein when the first short edge is located adjacent to the first electronic device and disposed along the first rotational axis, a fixing hole (223) of the flipped plate, through which the second sliding component is disposed, is located closer to the mounting hole of the first electronic device than the straight sliding groove.

13. The portable electronic device according to claim 8, wherein when the first long edge is located adjacent to the first electronic device and disposed along the first rotational axis, a corner (C) of the second electronic device connecting the first short edge and the first long edge has a first height (H1) relative to the first electronic device, when the first short edge is located adjacent to the first electronic device and disposed along the first rotational axis, the corner has a second height (H2) relative to the first electronic device, and the first height is equal to the second height.

14. The portable electronic device according to claim 8, wherein when the first long edge is located adjacent to the first electronic device and disposed along the first rotational axis, a corner of the second electronic device connecting the first short edge and the first long edge has a first height (H1c) relative to the first electronic device, when the first short edge is located adjacent to the first electronic device and disposed along the first rotational axis, the corner has a second height (H2c) relative to the first electronic device, and the second height is higher than the first height.

15. The portable electronic device according to claim 1, wherein the second electronic device is a touch screen, the first electronic device is a touch screen, and when the second electronic device is closed relative to the first electronic device, the display surface of the second electronic device faces away from the first electronic device.
